# EUROPEAN PATENT SPECIFICATION

(11) **EP 0 573 209 B1**
(45) Date of publication and mention of the grant of the patent: **11.09.1996**
(21) Application number: 93304108.9
(22) Date of filing: 26.05.1993
(51) Int. Cl.: B01D 46/04, B01D 46/02, B01D 53/34

(54) **Filtration of gases**
Filtrierung von Gasen
Filtration de gaz

(30) Priority: 30.05.1992 GB 9211551
(43) Date of publication of application: 08.12.1993
(73) Proprietor: FOSECO INTERNATIONAL LIMITED, Nechells Birmingham B7 5JR (GB)
(72) Inventor: Withers, Christopher Joseph, Kidderminster, Worcestershire DY11 5SE (GB); Callis, Roger Graham, Sapcote, Leicester, LE9 6JP (GB)
(74) Representative: Eyles, Winifred Joyce

(56) References cited:
- EP-A- 0 242 488
- EP-A- 0 314 253
- FR-A- 1 503 745

## Description

This invention relates to a method of and apparatus for filtering gases to remove unwanted contaminants entrained in a stream of the unfiltered gas. The unwanted contaminants may be particulate material, e.g. dust, or gaseous components.

Flue gases from, for example, industrial manufacturing operations, boilers and refuse incinerators contain a variety of undesirable contaminants such as dust and soot, hydrogen chloride, sulphur oxides, heavy metals and other noxious and toxic substances. Many systems have been proposed to filter these flue emissions and to reduce their harmful contents before release into the atmosphere. The previously proposed filtration systems have largely been based on one of two basic methods, i.e. electrostatic deposition of entrained particles or filtration through a filter medium, e.g. a filter cloth or a tubular hollow 'candle' type of filter. The present invention is concerned with the filter medium method.

It has also been previously proposed to remove unwanted gaseous components from a gas stream by injecting a reactant particulate medium into the gas stream whereby the unwanted gaseous component reacts with the reactant particulate and the resulting particulate product is removed from the gas stream. Such systems, heretofore proposed, that rely on filtration of the resultant particulate product have utilised flexible 'bag' type cloth filters for this purpose. These may be arranged in a number of rows and, when it is necessary to clean the filters to remove the deposited filtered-out particulates, the rows of the bags may be sequentially back-pulsed with clean air under pressure. This causes rapid expansion followed by contraction of each filter bag, thereby shaking off the deposited particulate material which can be collected and removed by various known means.

This system just described has, however, a number of disadvantages.

Firstly, the rapid expansion and contraction of the bag filter can cause some of the deposited particulates to pass completely through the filter and enter the supposedly clean, filtered emission. Moreover, having cleaned the build-up of deposit off the bag filter, the next portion of gas stream to be filtered then passes through the filter with minimal further contact between gas stream and reactant particulate. Thus, the only reaction between unwanted contaminants and reactant particulates takes place in the gas stream itself and will be less effective than in the period of operation when a build-up of deposit has taken place on the filter.

The present invention aims to alleviate these disadvantages and thereby provide a more effective removal of contaminants from the gas stream.

EP-A-0242488 also discloses a system to remove unwanted components from a gas stream by injecting a reactant particulate medium into the gas stream to react with the unwanted component, in which the filter is a rigid porous ceramic filter formed from, e.g. mullite or highly pure alumina, and in which the outside surface of the filter requires a pre-coat layer of a reaction aid to prevent clogging of the filter.

Accordingly, the invention provides an apparatus for removing unwanted contaminants from a gas stream which comprises a filter station containing at least one rigid porous ceramic filter, means to supply the stream of gas to be filtered to the filter station and means to introduce particulates which react with the contaminant into the gas stream before it reaches the filter station, wherein the rigid porous ceramic filter is made from a mixture containing ceramic fibres, refractory particulate materials and a binder.

By "particulate medium which reacts with the contaminant" is meant that the particulate medium is such that it reacts either chemically or physically, or by a combination of both, with the contaminant so that they become bound together whereby trapping of the reactive particulate medium at the surface of the filter also traps the contaminant.

At the initial start-up of the procedure, when clean filter elements are being used, it will be found advisable to pass a stream of clean gas, e.g. air, into which reactive particulate medium has been introduced, through the clean filters. This will enable a layer of the particulate medium to build up on the surface of the filters. When an adequate layer has built up, which will be readily determined by the skilled man of the art, the gas stream containing contaminant may replace the stream of clean gas. Introduction of further reactive particulate medium into the gas stream will result in further build up of particulates on the surface of the filter and greatly increase time of contact between the stream and the particulates whereby the desired reaction with the contaminants can take place.

When the build-up of deposited particulates on the surface of the filters reaches a certain thickness, again readily determinable by the skilled man of the art, it will become necessary to clean the filter surface so that passage of the gaseous medium can continue at the desired rate. The build-up of deposited particulates on the surface of the filter causes a gradual pressure drop increase across the filter. The need for cleaning can, therefore, be determined by this pressure drop change which may be monitored by any convenient means whether intermittent or continuous. Cleaning can then be effected when the pressure drop reaches a predetermined level to return the pressure drop to its lower starting value.

As with the above-mentioned bag filters, the cleaning can conveniently be achieved by back-pulsing with clean gas, usually air, under pressure. Again, as before mentioned, the filters may be arranged in rows and the rows may be sequentially cleaned so that there is no need to stop the flow of gas to be filtered, i.e. the filtering process can continue during filter cleaning. However, the construction of the present invention enables the disadvantages associated with cleaning bag filters to be avoided.

Because the filters are rigid, they do not expand and contract under the influence of the back-pulse pressure and hence, deposited particulates do not pass through the filters into the stream of filtered gas. Moreover, the cleaning can be effected so that a proportion only of the thickness of the deposited layer of particulates is removed. This can be controlled by the back-pressure employed, its speed of build-up and its duration. Thus, the thickness of the deposited layer can be reduced to a controlled desired thickness without affecting the continuous nature of the overall process and without harmfully reducing the effective reaction opportunity between the contaminants in the gas stream and the reactive particulate medium on the filter surface. For example, a back pressure of about 6 to 7 bar applied for about 100 to 200 milliseconds may be employed to clean each row of filter elements in turn.

A typical filter station might have 36 rigid filter elements or 'candles' in six rows of six candles. Cleaning of the candles can take place by back-pulsing one row of six candles at a time. However, much larger stations, e.g. containing up to 200 or more 'candles' may be employed, if desired.

It will be appreciated that, because of the ceramic nature of the rigid filters, they are substantially chemically inert and so are eminently suitable for dealing with very hot and very corrosive gas streams. For example, hot gas streams containing hydrogen chloride contaminant can be safely handled by the apparatus of the invention. Moreover, the rigid filter can operate at temperatures as high as 900°C.

To remove hydrogen chloride gas from a gas stream, lime (CaO or Ca(OH)₂), for example, of see less than 53 mesh (300 microns) can be introduced into the gas stream as the reactive particulate medium. Lime can usefully remove hydrogen chloride at gas stream temperatures up to about 140 to 150°C but, if it is necessary to remove it at a higher temperature, sodium bicarbonate may preferably be used as the reactive particulate medium. Sodium bicarbonate can be used to remove hydrogen chloride at gas stream temperatures up to 300° to 650°C. In contrast, if it wished to remove sulphur dioxide, then lime may be used at gas stream temperatures up to about 400° to 500°C. It will be appreciated that other alkaline reactants may be used instead of those mentioned above. To remove dioxins and odours, activated carbon may be used as the reactive particulate.

The ceramic filters used in the present invention may be made from any suitable mixture of solid ceramic fibres and refractory particulate materials bonded together to give the desired porosity and structural stability, bearing in mind the temperatures and chemical natures of the gaseous streams to which they will be exposed in use. The ceramic fibres are preferably of alumina, aluminosilicate, calcium silicate or zirconia. The refractory particulate materials are preferably alumina, silica, mullite, zirconia or silicon carbide. The binder is preferably colloidal silica and/or colloidal alumina.

The filters may conveniently be made for example, by vacuum-forming a slurry of the desired ingredients to the desired shape.

The invention will be further described by way of example only with reference to the accompanying drawings in which:-
Figure 1 is a schematic illustration of one means of carrying out the invention,
Figure 2 is a side view of the array of filter tubes in the arrangement of Figure 1; and
Figure 3 is a view in the direction of arrow A of Figure 2, with parts cut away.

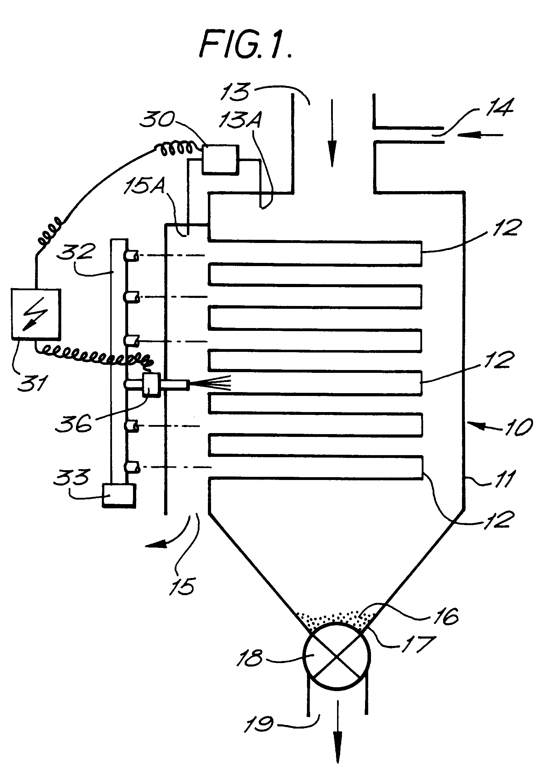

In Figure 1 a filter station 10 comprises a housing 11 in which are mounted a number of rigid filter tubes 12. The filter tubes 12 are mounted to extend horizontally. An inlet 13 at the top of housing 11 can be connected to a source of contaminated gas to be cleaned (not shown) e.g. from a flue. A second inlet 14 feeds into inlet 13. Inlet 14 can be connected to a source of particulate medium that is reactive with the contaminant to be removed from the contaminated gas.

Cleaned gas, i.e. gas that has passed through the porous wall of one of the filter tubes 12 exits from the filter station through exit 15.

Solid particulates 16 together with their captive contaminants are deposited in the base 17 of housing 11 when they are removed from the exterior walls of filter tubes 12 by back-pulse cleaning as described in more detail below. These deposits can be periodically removed from the housing through valve 18 and outlet 19.

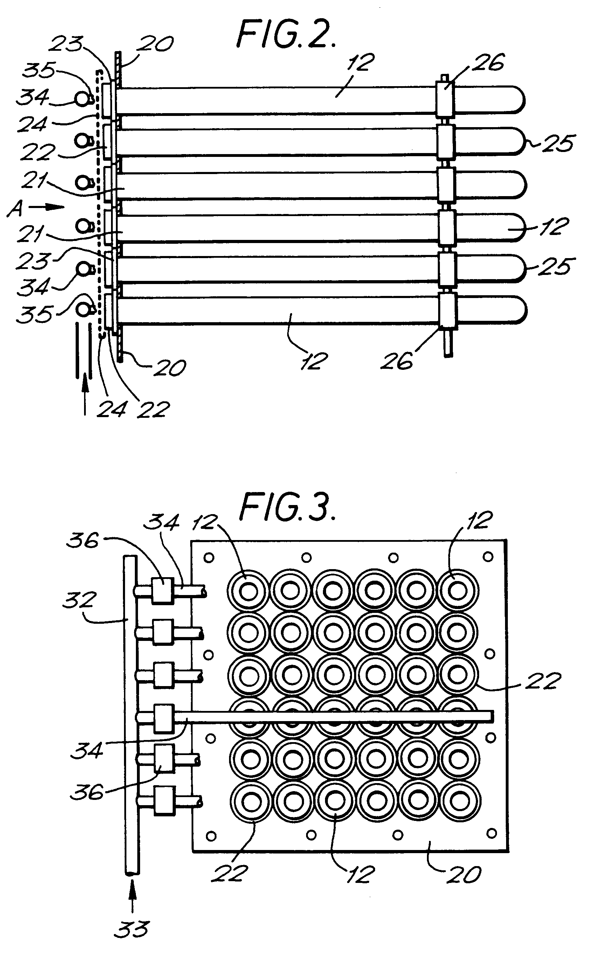

The mounting of the filter tubes 12 in the filter station is shown in more detail in Figures 2 and 3.

Six rows of six filter tubes 12 are mounted in a vertical header plate 20. The outlet end 21 of each tube has an enlarged shoulder region 22 which is sealingly abutted around the hole in plate 20 through which the tube extends by a sealing gasket 23. A perforated clamping plate 24 (Figure 2) is then attached over the open ends of the tubes.

Adjacent the closed ends 25 of tubes 12, the tubes are supported by mountings 26 to maintain their horizontal disposition.

The cleaning of filter tubes 12 is carried out as follows. The pressure differential between the inlet side 13 and outlet side 15 of the unit is monitored at 13A and 15A by a standard pressure differential switch 30 (Figure 1). When a predetermined pressure differential is reached, indicating that the build-up of deposits on the outsides of tubes 12 has reached a level at which cleaning is required, the sequence control box 31 is triggered to sequentially back-pulse clean air through each horizontal row of filter tubes in turn. A manifold 32 is connected to a source of compressed air 33. Extending from manifold 33 is a series of horizontal tubes 34, each extending across the outlet ends 21 of a horizontal row of filter tubes 12. Each tube 34 has an outlet jet 35 directed into each filter tube 12 in its row of tubes. Each tube 34 is connected to manifold 32 by a control valve 36.

When the pressure differential measurement reaches the predetermined amount, therefore, the sequence control box triggers the opening of control valves 36, one at a time so that compressed air is supplied as a back-pulse into each row of tubes 12 in turn until each row has been back-pulsed. Thus interuption of the continuous filtration process is not necessary.

## Claims

1. An apparatus for removing unwanted contaminants from a gas stream which comprises a filter station (10) containing at least one rigid porous ceramic filter (12), means to supply the gas stream to be filtered to the filter station (10) and means to introduce particulates which react with the contaminant into the gas stream before it reaches the filter station, characterised in that the rigid porous ceramic filter (12) is made from a composition containing ceramic fibres, refractory particulate materials and a binder.

2. An apparatus according to Claim 1, in which the ceramic fibres are of alumina, aluminosilicate, calcium silicate or zirconia.

3. An apparatus according to Claim 1 or 2, in which the refractory particulate material is alumina, silica, mullite, zirconia or silicon carbide.

4. An apparatus according to Claim 1, 2 or 3, in which the binder is colloidal silica and/or colloidal alumina.

5. An apparatus according to any preceding claim, which includes means to provide a stream of clean gas into which reactive particulate medium has been introduced, whereby the clean gas can be passed to the filter (12) before the gas stream containing contaminant is passed to the filter.

6. An apparatus according to any preceding claim, which includes means (32, 33, 34, 35) to provide a back-pulse of clean air under pressure to clean the filter (12).

7. An apparatus according to Claim 6, which includes means (30) to monitor the pressure drop across the filter (12) and to activate cleaning when the pressure drop reaches a predetermined amount.

8. An apparatus according to Claim 6 or 7, in which a back-pulse of 6 to 7 bar can be applied for 100 to 200 milliseconds.

9. An apparatus according to any preceding claim, in which the filters (12) are arranged in rows and the rows can be cleaned sequentially by a back-pulse pressure, whereby the flow of contaminated gas to be filtered can continue during cleaning.

10. An apparatus according to any preceding claim, which includes a source of lime or sodium bicarbonate as the reactive particulate medium.

## Patentansprüche

1. Vorrichtung zur Abtrennung unerwünschter Verunreinigungen aus einem Gasstrom, mit einer mindestens ein starres poröses keramisches Filter (12) beinhaltenden Filterstation (10), Einrichtungen zur Zufuhr des zu filternden Gasstroms zur Filterstation (10) sowie Einrichtungen zur Einbringung von mit der Verunreinigung reagierenden teilchenförmigen Materialien in den Gasstrom, bevor dieser die Filterstation erreicht, dadurch gekennzeichnet, daß das starre poröse keramische Filter (12) aus einer Keramikfasern, hochschmelzende teilchenförmige Werkstoffe sowie ein Bindemittel enthaltenden Zusammensetzung besteht.

2. Vorrichtung nach Anspruch 1, bei der die Keramikfasern aus Aluminiumoxid, Aluminosilicat, Calciumsilicat oder Zirkoniumoxid sind.

3. Vorrichtung nach Anspruch 1 oder 2, bei der es sich bei dem hochschmelzenden teilchenförmigen Werkstoff um Aluminiumoxid, Siliciumoxid, Mullit, Zirkoniumoxid oder Siliciumcarbid handelt.

4. Vorrichtung nach Anspruch 1, 2 oder 3, bei der es sich bei dem Bindemittel um kolloidales Siliciumoxid und/oder kolloidales Aluminiumoxid handelt.

5. Vorrichtung nach einem der vorhergehenden Ansprüche, die Einrichtungen zur Lieferung eines Reingasstroms beinhaltet, in den reaktives teilchenförmiges Medium eingetragen worden ist, wodurch das Reingas dem Filter (12) zugeleitet werden kann, bevor der Verunreinigung enthaltende Gasstrom dem Filter zugeleitet wird.

6. Vorrichtung nach einem der vorhergebenden Ansprüche, die Einrichtungen (32, 33, 34, 35) zur Lieferung eines Rückwartsstoßes von Reinluft unter Druck zur Reinigung des Filters (12) beinhaltet.

7. Vorrichtung nach Anspruch 6, die eine Einrichtung (30) zur Überwachung des Druckabfalls über das Filter (12) und zur Einschaltung der Reinigung, sobald der Druckabfall einen vorgegebenen Betrag erreicht, beinhaltet.

8. Vorrichtung nach Anspruch 6 oder 7, bei der eine Beaufschlagung mit einem Rückwärtsstoß von 6 bis 7 Bar 100 bis 200 Millisekunden lang erfolgen kann.

9. Vorrichtung nach einem der vorhergehenden Ansprüche, bei der die Filter (12) reihenweise angeordnet sind und die Reihen nacheinander durch einen Rückwärtsstoßdruck gereinigt werden können, wodurch der Strom von verunreinigtem, zu filterndem Gas während der Reinigung weiterfließen kann.

10. Vorrichtung nach einem der vorhergehenden Ansprüche, die eine Quelle von Kalk oder Natriumbicarbonat als das reaktive teilchenförmige Medium beinhaltet.

## Revendications

1. Appareil pour éliminer les contaminants indésirables d'un courant gazeux, qui comprend une station de filtration (10) contenant au moins un filtre en céramique poreuse, rigide (12), un moyen d'amener le courant de gaz à filtrer à la station de filtration (10), et un moyen pour introduire des particules qui réagissent avec le contaminant dans le courant gazeux avant qu'il atteigne la station de filtration, caractérisé en ce que le filtre en céramique poreuse, rigide (12), est fait d'un mélange contenant des fibres de céramique, des matières particulaires réfractaires et un liant.

2. Appareil selon la revendication 1, dans lequel les fibres de céramique sont en alumine, aluminosilicate, silicate de calcium ou zircone.

3. Appareil selon la revendication 1 ou 2, dans lequel le matériau particulaire réfractaire est de l'alumine, de la silice, de la mullite, de la zircone ou du carbure de silicium.

4. Appareil selon la revendication 1, 2 ou 3, dans lequel le liant est de la silice colloïdale et/ou de l'alumine colloïdale.

5. Appareil selon l'une quelconque des revendications précédentes, qui comprend un moyen pour amener un courant de gaz propre dans lequel du milieu particulaire réactif a été introduit, de manière que le gaz propre puisse passer vers le filtre (12) avant que le courant gazeux contenant le contaminant soit envoyé sur le filtre.

6. Appareil selon l'une quelconque des revendications précédentes, qui comprend des moyens (32, 33, 34, 35) pour fournir un refoulement par impulsions d'air propre sous pression pour nettoyer le filtre (12).

7. Appareil selon la revendication 6, qui comprend un moyen (30) pour contrôler la perte de charge d'un côté à l'autre du filtre (12) et activer le nettoyage lorsque la perte de charge atteint une quantité prédéterminée.

8. Appareil selon la revendication 6 ou 7, dans lequel une pression de refoulement par impulsions de 6 à 7 bars peut être appliquée pendant 100 à 200 millisecondes.

9. Appareil selon l'une quelconque des revendications précédentes, dans lequel les filtres (12) sont disposés en rangées et les rangées peuvent être nettoyées les unes après les autres par des impulsions de pression de refoulement, ce qui fait que la circulation du gaz contaminé à filtrer peut être poursuivie durant le nettoyage.

10. Appareil selon l'une quelconque des revendications précédentes, qui comprend une source de chaux ou de bicarbonate de sodium comme milieu particulaire réactif.
